# FASCICULE DE BREVET EUROPEEN

(11) **EP 2 303 428 B1**
(45) Date de publication et mention de la délivrance du brevet: **10.02.2016**
(21) Numéro de dépôt: 09769460.8
(22) Date de dépôt: 23.06.2009
(51) Int. Cl.: B01D 53/14, C07C 209/90, C09K 15/30

(54) **SOLUTION ABSORBANTE CONTENANT UN INHIBITEUR DE DÉGRADATION DÉRIVÉ DU THIADIAZOLE ET MÉTHODE POUR LIMITER LA DÉGRADATION D'UNE SOLUTION ABSORBANTE**
ABSORPTIONSLÖSUNG MIT EINEM VON THIADIAZOL ABGELEITETEN DEGRADATIONSHEMMER UND VERFAHREN ZUR BEGRENZUNG DER DEGRADATION EINER ABSORPTIONSLÖSUNG
ABSORBING SOLUTION CONTAINING A THIADIAZOLE-DERIVED DEGRADATION INHIBITOR AND METHOD FOR LIMITING THE DEGRADATION OF AN ABSORBING SOLUTION

(30) Priorité: 27.06.2008 FR 0803683
(43) Date de publication de la demande: 06.04.2011
(73) Titulaire: IFP Énergies nouvelles, 92852 Rueil-Malmaison Cedex (FR)
(72) Inventeur: CARRETTE, Pierre-Louis, F-69005 Lyon (FR); DELFORT, Bruno, F-75005 Paris (FR)
(86) Numéro de dépôt international: PCT/FR2009/000775
(87) Numéro de publication internationale: WO 2009/156619

(56) Documents cités:
- EP-A- 0 592 956
- EP-A- 1 582 250
- WO-A-2005/035700
- FR-A- 2 900 842
- US-A- 2 655 543

## Description

La présente invention concerne le domaine de la désacidification d'un effluent gazeux. Plus précisément la présente invention propose des composés pour réduire la dégradation d'une solution absorbante mise en oeuvre pour absorber les composés acides contenus dans un effluent gazeux, la solution absorbante comportant des amines en solution aqueuse.

La désacidification des effluents gazeux, tels que par exemple le gaz naturel et les fumées de combustion, est généralement réalisée par lavage par une solution absorbante. La solution absorbante permet d'absorber les composés acides présents dans l'effluent gazeux (H₂S, mercaptans, CO₂, COS, SO₂, CS₂).

La désacidification de ces effluents, notamment la décarbonatation et la désulfuration, impose des contraintes spécifiques à la solution absorbante, en particulier une stabilité thermique et chimique notamment face aux impuretés de l'effluent, à savoir essentiellement l'oxygène, les SOx et les NOx.

Les solutions absorbantes les plus utilisées aujourd'hui sont les solutions aqueuses d'alcanolamines. On peut citer le document FR 2 820 430 ou FR 2 900 842 qui proposent des procédés de désacidification d'effluents gazeux.

Toutefois, il est bien connu de l'homme de l'art que ces amines présentent l'inconvénient de se dégrader dans les conditions de mise en oeuvre.

En particulier, les amines peuvent être dégradées par l'oxygène formant des acides tels que par exemple l'acide formique, l'acide acétique ou encore l'acide oxalique dans les solutions d'amines.

Ces acides réagissent avec les amines suivant une réaction acide base pour former des sels, appelés « Heat Stable Salt » (HSS) ou « Heat Stable Amine Salt » (HSAS). Ces acides sont des acides plus forts que l'acide carbonique (formé par la réaction du CO₂ avec l'eau). Les sels qu'ils forment par réaction avec les amines ne sont donc pas régénérés dans la colonne de régénération dans les conditions normales de fonctionnement des unités, et s'accumulent dans l'unité.

Dans le cas du captage du CO₂ dans les fumées issues d'unités industrielles ou de production d'électricité ou d'énergie en général, les phénomènes de dégradation de la solution absorbante aux amines sont accrus par la présence d'une quantité massive d'oxygène dans la charge à traiter pouvant aller jusqu'à 5% en volume en général. Dans le cas de fumées issues de cycle combiné au gaz naturel, la teneur volumique d'oxygène dans les fumées peut atteindre 15%.

La solution dégradée se caractérise par :
- une baisse de l'absorption des composés acides de la charge par rapport à une solution fraîche d'amine,
- une augmentation de la densité de la solution absorbante, ainsi que de sa viscosité, pouvant entraîner une perte de performance,
- la formation d'amines plus volatiles polluant le gaz traité et le gaz acide issu de l'étape de régénération : ammoniac, méthylamine, diméthylamine et triméthylamine par exemple selon la nature de l'amine utilisée,
- une accumulation de produits de dégradation dans la solution absorbante qui peut entraîner la nécessité d'un traitement de la solution dégradée,
- d'éventuels problèmes de moussage dus aux produits de dégradation.

La dégradation de la solution absorbante pénalise donc les performances et le bon fonctionnement des unités de désacidification des gaz.

Pour pallier le problème de dégradation, à défaut de pouvoir limiter ou supprimer la présence d'oxygène dans la solution absorbante, on ajoute, dans la solution absorbante, des composés dont le rôle est de prévenir ou limiter les phénomènes de dégradation des composés amines, notamment la dégradation engendrée par les phénomènes d'oxydation. Ces composés sont couramment nommés agents inhibiteurs de dégradation. Les principaux modes d'action connus des agent inhibiteurs de dégradation consistent selon leur nature en une réaction de type réduction et/ou en un captage, un piégeage et/ou une stabilisation des radicaux formés dans la solution absorbante afin de limiter ou d'empêcher ou d'interrompre les réactions, notamment les réactions en chaîne, de dégradation.

Les brevets US 5686016 et US 7056482 citent des additifs utilisés pour limiter la dégradation de solutions absorbantes utilisées respectivement pour la désacidification du gaz naturel et pour le captage du CO₂.

Le brevet US 2 655 543 porte sur des amines aromatiques stabilisées contre l'oxydation atmosphérique à l'aide d'antioxydants hétérocycliques.

La demande de brevet EP 1 582 250 décrit une solution absorbante avec une amine aliphatique et des additifs antioxydants.

De manière générale, la présente invention propose une famille d'agents inhibiteurs de dégradation qui permet notamment de réduire la dégradation d'une solution absorbante mise en oeuvre pour l'absorption de composés acides contenus dans un effluent gazeux, la solution absorbante comportant des composés amines en solution aqueuse.

La solution absorbante selon l'invention, pour absorber les composés acides d'un effluent gazeux, comporte :
a) au moins une amine,
b) de l'eau,
c) au moins un composé inhibiteur de dégradation pour limiter la dégradation de ladite amine, le composé inhibiteur de dégradation ayant pour formule générale : 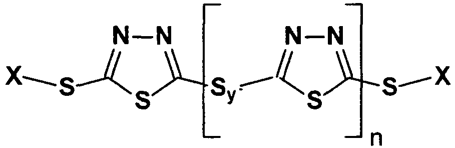 dans laquelle X est choisi parmi le groupe contenant
   - un atome d'hydrogène,
   - un groupement hydrocarboné renfermant 1 à 20 atomes de carbone,
   - un élément alcalin,
   - un élément alcalino-terreux,
   - un métal monovalent,
   - un métal multivalent,
   - un ammonium,
   et dans laquelle
   y est compris entre 1 et 4,
   n est compris entre 0 et 4.

Selon l'invention, X peut être un groupement hydrocarboné contenant entre 1 et 20 atomes de carbone et incluant au moins un hétéroatome.

La solution comporte entre 10% et 80% poids d'amine, entre 10% et 90% d'eau et entre 5 ppm et 5% poids de composé inhibiteur de dégradation.

Le composé inhibiteur de dégradation peut être choisi parmi le groupe contenant: le 5,5'-dithiobis(1,3,4-thiadiazole-2(3H)-thione), un sel du 5,5'-dithiobis(1,3,4-thiadiazole-2(3H)-thione), le 2,5-dimercapto-1,3,4-thiadiazole, un sel du 2,5-dimercapto-1,3,4-thiadiazole, le 5-(méthylthio)-1,3,4-thiadiazole-2-thiol, un sel du 5-(méthylthio)-1,3,4-thiadiazole-2-thiol, le 5-(éthylthio)-1,3,4-thiadiazole-2-thiol et un sel du 5-(éthylthio)-1,3,4-thiadiazole-2-thiol.

L'amine est choisie parmi le groupe contenant : la N,N,N',N',N"-pentaméthyléthylènetriamine, la pipérazine, la monoéthanolamine, la diéthanolamine, la méthyldiéthanolamine, la diisopropanolamine, la diglycolamine un sel de la glycine et un sel de la taurine.

Dans le cas où l'amine est la monoéthanolamine, le composé inhibiteur de dégradation peut être choisi parmi le 5,5'-dithiobis(1,3,4-thiadiazole-2(3H)-thione), le sel de sodium du 5,5'-dithiobis(1,3,4-thiadiazole-2(3H)-thione), le 2,5-dimercapto-1,3,4-thiadiazole et le sel de sodium du 2,5-dimercapto-1,3,4-thiadiazole.

L'invention propose également un procédé pour absorber des composés acides contenus dans un effluent gazeux, dans lequel on met en contact l'effluent gazeux avec une solution aqueuse comportant au moins une amine, et dans lequel on contrôle la dégradation de ladite amine en introduisant au moins un composé inhibiteur de dégradation ayant pour formule générale : 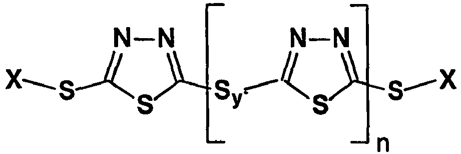 dans laquelle X est choisi parmi le groupe contenant
- un atome d'hydrogène,
- un groupement hydrocarboné renfermant 1 à 20 atomes de carbone,
- un élément alcalin,
- un élément alcalino-terreux,
- un métal monovalent,
- un métal multivalent,
- un ammonium,
et dans laquelle
y est compris entre 1 et 4,
n est compris entre 0 et 4.

Dans le procédé selon l'invention, la solution aqueuse peut être mise en oeuvre pour absorber des composés acides contenus dans l'un des effluents du groupe contenant le gaz naturel, les fumées de combustion, les gaz de synthèse, les gaz de raffinerie, les gaz obtenus en queue du procédé Claus, les gaz de fermentation de biomasse, les gaz de cimenterie et les fumées d'incinérateur.

On peut ajouter dans la solution aqueuse au moins un composé inhibiteur de dégradation choisis parmi le groupe contenant : le 5,5'-dithiobis(1,3,4-thiadiazole-2(3H)-thione), un sel du 5,5'-dithiobis(1,3,4-thiadiazole-2(3H)-thione), le 2,5-dimercapto-1,3,4-thiadiazole, un sel du 2,5-dimercapto-1,3,4-thiadiazole, le 5-(méthylthio)-1,3,4-thiadiazole-2-thiol, un sel du 5-(méthylthio)-1,3,4-thiadiazole-2-thiol, le 5-(éthylthio)-1,3,4-thiadiazole-2-thiol et un sel du 5-(éthylthio)-1,3,4-thiadiazole-2-thiol.

Pour limiter la dégradation de la monoéthanolamine en solution aqueuse mise en oeuvre pour capter le CO2 des fumées de combustion, on peut ajouter au moins un composé inhibiteur de dégradation choisis parmi: le 5,5'-dithiobis(1,3,4-thiadiazole-2(3H)-thione), le sel de sodium du 5,5'-dithiobis(1,3,4-thiadiazole-2(3H)-thione), le 2,5-dimercapto-1,3,4-thiadiazole, le sel de sodium du 2,5-dimercapto-1,3,4-thiadiazole.

D'autres caractéristiques et avantages de l'invention seront mieux compris et apparaîtront clairement à la lecture de la description faite ci-après.

Afin de réduire la dégradation d'une solution absorbante, les inventeurs ont montré que la dégradation d'une solution absorbante comportant des composés organiques munis d'une fonction amine en solution aqueuse est sensiblement réduite en présence d'une faible quantité d'agents inhibiteurs de dégradation décrits ci-après.

Les agents inhibiteurs de dégradation selon l'invention sont des composés organiques dérivés du thiadiazole définis par la formule générale : 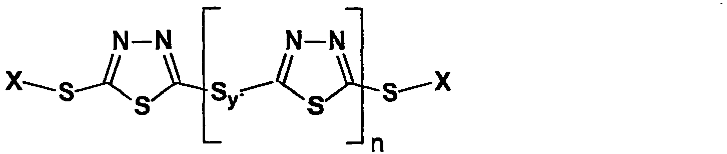 dans laquelle X est choisi parmi le groupe contenant
- un atome d'hydrogène,
- un groupement hydrocarboné renfermant 1 à 20 atomes de carbone et de préférence de 1 à 6 atomes de carbone, le groupement hydrocarboné pouvant renfermer un ou plusieurs hétéroatomes,
- un élément alcalin, en particulier le sodium, le potassium et le lithium,
- un élément alcalino-terreux,
- un métal monovalent,
- un métal multivalent, en particulier le cuivre,
- un ammonium défini au sens large comme le produit de la protonation ou de la quaternisation d'une molécule contenant au moins un atome d'azote,
et dans laquelle
y est compris entre 1 et 4, de préférence entre 1 et 2,
n est compris entre 0 et 4, de préférence entre 0 et 1.

Lorsque n est supérieur à 1, le motif 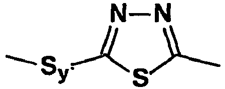 est répété n fois, la valeur de y est identique ou différente d'un motif à l'autre.

Les solutions absorbantes selon l'invention peuvent être mises en oeuvre pour désacidifier les effluents gazeux suivants : le gaz naturel, les gaz de synthèse, les fumées de combustion, les gaz de raffinerie, les gaz obtenus en queue du procédé Claus, les gaz de fermentation de biomasse, les gaz de cimenterie, les fumées d'incinérateur. Ces effluents gazeux contiennent un ou plusieurs des composés acides suivants : le CO₂, l'H₂S, des mercaptans, du COS, du SO₂, du NO₂, du CS₂. Les fumées de combustion sont produites notamment par la combustion d'hydrocarbures, de biogaz, de charbon dans une chaudière ou pour une turbine à gaz de combustion, par exemple dans le but de produire de l'électricité. Ces fumées peuvent comporter entre 50 % et 80 % d'azote, entre 5 % et 20 % de dioxyde de carbone, entre 1 % et 10 % d'oxygène.

La mise en oeuvre d'une solution absorbante pour désacidifier un effluent gazeux est généralement réalisée en effectuant une étape d'absorption suivie d'une étape de régénération. L'étape d'absorption consiste à mettre en contact l'effluent gazeux avec la solution absorbante. Lors du contact, les composés organiques munis d'une fonction amine de la solution absorbante réagissent avec les composés acides contenus dans l'effluent de manière à obtenir un effluent gazeux appauvri en composés acides et une solution absorbante enrichie en composés acides. L'étape de régénération consiste notamment à chauffer et, éventuellement à détendre, au moins une partie de la solution absorbante enrichie en composés acides afin de libérer les composés acides sous forme gazeuse. La solution absorbante régénérée, c'est-à-dire appauvrie en composés acides est recyclée à l'étape d'absorption.

La solution absorbante selon l'invention comporte des composés organiques en solution aqueuse. De manière générale, les composés organiques sont des amines, c'est-à-dire qu'ils comportent au moins une fonction amine. Les composés organiques peuvent être en concentration variable par exemple compris entre 10% et 80% poids, de préférence entre 20% et 60% poids, dans la solution aqueuse. La solution absorbante peut contenir entre 10% et 90% d'eau.

Par exemples les composés organiques sont des amines tels que la N,N,N',N',N"-pentaméthyléthylènetriamine ou la pipérazine. Par exemple la pipérazine est utilisée pour le traitement du gaz naturel et pour la décarbonatation des fumées de combustion.

Les composés organiques peuvent également être des alcanolamines telles que la monoéthanolamine (MEA), la diéthanolamine (DEA), la méthyldiéthanolamine (MDEA), la diisopropanolamine (DIPA) ou la diglycolamine. De préférence, la MDEA et la DEA sont couramment utilisées pour la désacidification du gaz naturel. La MEA est plus particulièrement utilisée pour la décarbonatation des fumées de combustion.

Les composés organiques peuvent également être des sels d'acides aminés tels que les sels de la glycine ou de la taurine qui sont notamment mis en oeuvre pour le captage du CO₂ dans les fumées de combustion.

En outre, la solution absorbante selon l'invention peut contenir des composés qui absorbent physiquement au moins partiellement un ou plusieurs composés acides de l'effluent gazeux. Par exemple la solution absorbante peut comporter entre 5% et 50% poids de composés absorbants à caractère physique tel que du méthanol, du sulfolane ou de la N-formyl morpholine.

Parmi l'ensemble des molécules correspondant à la formule générale décrite ci-dessus, on utilise de préférence les agents inhibiteurs de dégradation suivants: le 5,5'-dithiobis(1,3,4-thiadiazole-2(3H)-thione), un sel du 5,5'-dithiobis(1,3,4-thiadiazole-2(3H)-thione) (en particulier le sel de sodium, de potassium, de lithium, de cuivre ou d'ammonium du 5,5'-dithiobis(1,3,4-thiadiazole-2(3H)-thione)), le 2,5-dimercapto-1,3,4-thiadiazole, un sel du 2,5-dimercapto-1,3,4-thiadiazole (en particulier le sel de sodium, de potassium, de lithium, de cuivre ou d'ammonium du 2,5-dimercapto-1,3,4-thiadiazole), le 5-(méthylthio)-1,3,4-thiadiazole-2-thiol), un sel du 5-(méthylthio)-1,3,4-thiadiazole-2-thiol) (en particulier le sel de sodium, de potassium, de lithium, de cuivre ou d'ammonium 5-(méthylthio)-1,3,4-thiadiazole-2-thiol)), le 5-(éthylthio)-1,3,4-thiadiazole-2-thiol et un sel du 5-(éthylthio)-1,3,4-thiadiazole-2-thiol (en particulier le sel de sodium, de potassium, de lithium, de cuivre ou d'ammonium du 5-(éthylthio)-1,3,4-thiadiazole-2-thiol)). Parmi cette liste de produits inhibiteurs de dégradation, on choisit d'utiliser de préférence les produits suivants : le 5,5'-dithiobis(1,3,4-thiadiazole-2(3H)-thione), le sel de sodium du 5,5'-dithiobis(1,3,4-thiadiazole-2(3H)-thione), le 2,5-dimercapto-1,3,4-thiadiazole, le sel de sodium du 2,5-dimercapto-1,3,4-thiadiazole.

Les agents inhibiteurs de dégradation listés au paragraphe précédent sont particulièrement bien adaptés pour la prévention de la dégradation d'amine en solution aqueuse mise en oeuvre dans un procédé de captage du CO₂ contenu dans des fumées de combustion.

Pour limiter la dégradation d'une solution absorbante composée d'alcanolamine, en particulier la monoéthanolamine (MEA), en solution aqueuse pour capter le CO2 des fumées de combustion, on peut utiliser de préférence l'un des composés suivants : le 5,5'-dithiobis(1,3,4-thiadiazole-2(3H)-thione), le sel de sodium du 5,5'-dithiobis(1,3,4-thiadiazole-2(3H)-thione), le 2,5-dimercapto-1,3,4-thiadiazole, le sel de sodium du 2,5-dimercapto-1,3,4-thiadiazole.

La solution absorbante selon l'invention comporte une quantité d'agents inhibiteurs de dégradation définis par la formule générale décrite ci-dessus. La solution absorbante peut comporter un ou plusieurs agents inhibiteurs de dégradation différents correspondant à ladite formule générale. De plus, dans la solution absorbante, les agents inhibiteurs de dégradation selon l'invention peuvent être associés à d'autres composés inhibiteurs de dégradation de familles chimiques différentes. Selon l'invention, la solution absorbante comporte entre 5 ppm et 5% poids d'agents inhibiteurs de dégradation selon l'invention, de préférence de 50 ppm à 2% poids, et une excellente teneur en agents inhibiteurs de dégradation dans la solution étant comprise entre 100 ppm et 1% poids.

Les exemples présentés ci-après permettent de comparer et d'illustrer les performances des agents inhibiteurs de dégradation selon l'invention, en terme de réduction de la dégradation des amines en solution aqueuse.

Les essais de dégradation d'une amine en solution aqueuse sont effectués selon le mode opératoire suivant.

100ml de solution d'amine 30% poids dans l'eau désionisée sont placés dans un réacteur en verre surmonté d'un condenseur pour éviter l'évaporation de l'eau. Selon les essais, on fait varier l'agent inhibiteur de dégradation incorporé dans la solution aqueuse d'amine. Le réacteur est chauffé à 80°C dans un bloc chauffant électrique. La solution est agitée à 1200 tours par minute par un barreau aimanté. La présence de contre-pales empêche la formation d'un vortex. 7NI/h d'air atmosphérique, c'est-à-dire de l'air ambiant non purifié, sont mis en contact avec la solution à l'aide d'un tube plongeant pendant 7 jours à pression atmosphérique. Une analyse par chromatographie ionique de la solution ainsi dégradée est alors réalisée. La méthode analytique utilise une colonne échangeuse d'anions, un éluant à la potasse et une détection conductimétrique. Cette analyse permet de quantifier les ions acétate, oxalate et formiate qui sont les espèces généralement suivies par l'homme de l'art car elles témoignent du taux de dégradation de l'amine. Les teneurs en ppm de ces différents anions sont données dans le tableau ci-dessous dans le cas d'une solution de aqueuse de monoéthanolamine (MEA) 30% poids sans inhibiteur de dégradation, avec 1% poids d'un inhibiteur de dégradation classique (l'hydroquinone) et avec 1% poids de 5,5'-dithiobis(1,3,4-thiadiazole-2(3H)-thione), du sel de sodium du 5,5'-dithiobis(1,3,4-thiadiazole-2(3H)-thione), du 2,5-dimercapto-1,3,4-thiadiazole et du sel de sodium du 2,5-dimercapto-1,3,4-thiadiazole.

| Nom de l'additif | Additif % poids | Acetate ppm | Formiate ppm | Oxalate ppm |
|---|---|---|---|---|
| - | 0% | 51 | 3910 | 197 |
| hydroquinone | 1% | 189 | 17063 | 3450 |
| 5,5'-dithiobis(1,3,4-thiadiazole-2(3H)-thione) | 1% | ND | 159 | ND |
| 2,5-dimercapto-1,3,4-thiadiazole | 1% | ND | 89 | ND |
| sel de sodium du 5,5'-dithiobis(1,3,4-thiadiazole-2(3H)-thione) | 1% | ND | 140 | ND |
| sel de sodium du 2,5-dimercapto-1,3,4-thiadiazole | 1% | ND | 33 | ND |

| | | | | |
|---|---|---|---|---|
| ND : valeur non déterminée car inférieure à la limite de détection de la méthode d'analyse pour une dilution donnée de l'échantillon analysé. | | | | |

Cet exemple comparatif montre que l'utilisation d'un inhibiteur de dégradation classique, l'hydroquinone, aggrave la dégradation de la MEA alors que l'utilisation des inhibiteurs de dégradation selon l'invention permet de limiter fortement la dégradation de la MEA dans les conditions de l'exemple.

## Revendications

1. Procédé pour absorber des composés acides contenus dans un effluent gazeux dans lequel on met en contact l'effluent gazeux avec une solution aqueuse comportant au moins une amine, ladite amine étant choisie parmi le groupe contenant la N,N,N',N',N"-pentaméthyléthylènetriamine, la pipérazine, la monoéthanolamine, la diéthanolamine, la méthyldiéthanolamine, la diisopropanolamine, la diglycolamine un sel de la glycine et un sel de la taurine, et dans lequel on contrôle la dégradation de ladite amine en introduisant au moins un composé inhibiteur de dégradation pour limiter la dégradation de ladite amine, le composé inhibiteur de dégradation ayant pour formule générale : 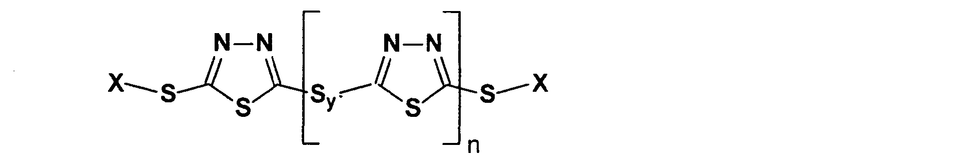 dans laquelle X est choisi parmi le groupe contenant
• un atome d'hydrogène,
• un groupement hydrocarboné renfermant 1 à 20 atomes de carbone,
• un élément alcalin,
• un élément alcalino-terreux,
• un métal monovalent,
• un métal multivalent,
• un ammonium,
et dans laquelle
y est compris entre 1 et 4,
n est compris entre 0 et 4,
ladite solution comprenant entre 10% et 80% poids de ladite amine, entre 10% et 90% poids d'eau, et entre 5 ppm et 5% poids dudit composé inhibiteur de dégradation.

2. Procédé selon la revendication 1, dans lequel X est un groupement hydrocarboné contenant entre 1 et 20 atomes de carbone et incluant au moins un hétéroatome.

3. Procédé selon l'une des revendications précédentes, dans lequel on ajoute dans la solution aqueuse au moins un composé inhibiteur de dégradation choisi parmi le groupe contenant : le 5,5'-dithiobis(1,3,4-thiadiazole-2(3H)-thione), un sel du 5,5'-dithiobis(1,3,4-thiadiazole-2(3H)-thione), le 2,5-dimercapto-1,3,4-thiadiazole, un sel du 2,5-dimercapto-1,3,4-thiadiazole, le 5-(méthylthio)-1,3,4-thiadiazole-2-thiol, un sel du 5-(méthylthio)-1,3,4-thiadiazole-2-thiol, le 5-(éthylthio)-1,3,4-thiadiazole-2-thiol et un sel du 5-(éthylthio)-1,3,4-thiadiazole-2-thiol.

4. Procédé selon la revendication 3, dans lequel pour limiter la dégradation de la monoéthanolamine en solution aqueuse mise en oeuvre pour capter le CO₂ des fumées de combustion, on ajoute dans la solution aqueuse au moins un composé inhibiteur de dégradation choisi parmi le 5,5'-dithiobis(1,3,4-thiadiazole-2(3H)-thione), le sel de sodium du 5,5'-dithiobis(1,3,4-thiadiazole-2(3H)-thione), le 2,5-dimercapto-1,3,4-thiadiazole et le sel de sodium du 2,5-dimercapto-1,3,4-thiadiazole.

5. Procédé selon la revendication 1, dans lequel la solution aqueuse est mise en oeuvre pour absorber des composés acides contenus dans l'un des effluents du groupe contenant le gaz naturel, les fumées de combustion, les gaz de synthèse, les gaz de raffinerie, les gaz obtenus en queue du procédé Claus, les gaz de fermentation de biomasse, les gaz de cimenterie et les fumées d'incinérateur.

6. Solution absorbante pour absorber les composés acides d'un effluent gazeux, ladite solution comportant :
a) entre 10% et 80% poids d'au moins une amine, ladite amine étant choisie parmi le groupe contenant : la N,N,N',N',N"-pentaméthyléthylènetriamine, la pipérazine, la monoéthanolamine, la diéthanolamine, la méthyldiéthanolamine, la diisopropanolamine, la diglycolamine un sel de la glycine et un sel de la taurine,
b) entre 10% et 90% poids d'eau,
c) entre 5 ppm et 5% poids d'au moins un composé inhibiteur de dégradation pour limiter la dégradation de ladite amine, le composé inhibiteur de dégradation ayant pour formule générale : 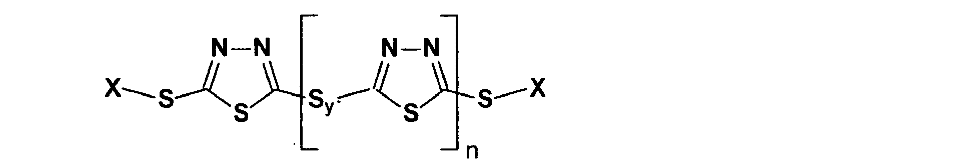 dans laquelle X est choisi parmi le groupe contenant
• un atome d'hydrogène,
• un groupement hydrocarboné renfermant 1 à 20 atomes de carbone,
• un élément alcalin,
• un élément alcalino-terreux,
• un métal monovalent,
• un métal multivalent,
• un ammonium,
et dans laquelle
y est compris entre 1 et 4,
n est compris entre 0 et 4.

7. Solution absorbante selon la revendication 6, dans laquelle X est un groupement hydrocarboné contenant entre 1 et 20 atomes de carbone et incluant au moins un hétéroatome.

8. Solution absorbante selon l'une des revendications 6 et 7, dans laquelle le composé inhibiteur de dégradation est choisi parmi le groupe contenant : le 5,5'-dithiobis(1,3,4-thiadiazole-2(3H)-thione), un sel du 5,5'-dithiobis(1,3,4-thiadiazole-2(3H)-thione), le 2,5-dimercapto-1,3,4-thiadiazole, un sel du 2,5-dimercapto-1,3,4-thiadiazole, le 5-(méthylthio)-1,3,4-thiadiazole-2-thiol, un sel du 5-(méthylthio)-1,3,4-thiadiazole-2-thiol, le 5-(éthylthio)-1,3,4-thiadiazole-2-thiol et un sel du 5-(éthylthio)-1,3,4-thiadiazole-2-thiol.

9. Solution absorbante selon l'une des revendications 6 à 8, dans laquelle l'amine est la monoéthanolamine et dans laquelle le composé inhibiteur de dégradation est choisi parmi le 5,5'-dithiobis(1,3,4-thiadiazole-2(3H)-thione), le sel de sodium du 5,5'-dithiobis(1,3,4-thiadiazole-2(3H)-thione), le 2,5-dimercapto-1,3,4-thiadiazole et le sel de sodium du 2,5-dimercapto-1,3,4-thiadiazole.

## Patentansprüche

1. Verfahren zur Absorption saurer Verbindungen, die ein einem Abgasstrom enthalten sind, wobei der Abgasstrom mit einer wässrigen Lösung in Kontakt gebracht wird, die mindestens ein Amin aufweist, wobei dieses Amin aus der Gruppe ausgewählt ist, welche N,N,N',N',N"-Pentamethylethylentriamin, Piperazin, Monoethanolamin, Diethanolamin, Methyldiethanolamin, Diisopropanolamin, Diglycolamin, ein Glycinsalz und ein Taurinsalz enthält, und wobei dem Abbau des Amins entgegengewirkt wird, indem mindestens eine abbauhemmende Verbindung zugesetzt wird, um den Abbau des Amins zu beschränken, wobei die abbauhemmende Verbindung die folgende allgemeine Formel hat: 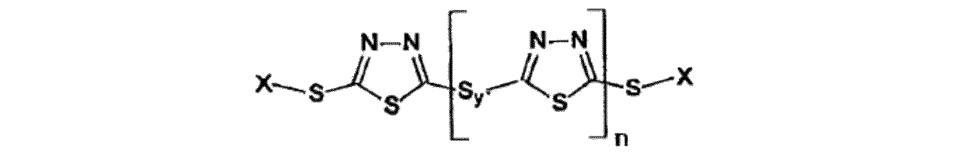 in welcher X aus der Gruppe ausgewählt ist, die Folgendes enthält
• ein Wasserstoffatom,
• eine Kohlenwasserstoffgruppe mit 1 bis 20 Kohlenstoffatomen,
• ein Alkalielement,
• ein Erdalkalielement,
• ein einwertiges Metall,
• ein mehrwertiges Metall,
• ein Ammonium,
und in welcher
y im Bereich von 1 bis 4 liegt,
n im Bereich von 0 bis 4 liegt,
wobei die Lösung zwischen 10 Gewichts-% und 80 Gewichts-% des Amins, zwischen 10 Gewichts-% und 90 Gewichts-% an Wasser und zwischen 5 ppm und 5 Gewichts-% der abbauhemmenden Verbindung umfasst.

2. Verfahren nach Anspruch 1, wobei X eine Kohlenwasserstoffgruppe ist, die zwischen 1 und 20 Kohlenstoffatome enthält und mindestens ein Heteroatom umfasst.

3. Verfahren nach einem der vorhergehenden Ansprüche, wobei der wässrigen Lösung mindestens eine abbauhemmende Verbindung zugesetzt wird, die aus der Gruppe ausgewählt ist, welche Folgendes enthält: 5,5'-Dithiobis(1,3,4-thiadiazol-2(3H)-thion), ein Salz von 5,5'-Dithiobis(1,3,4-thiadiazol-2(3H)-thion), 2,5-Dimercapto-1,3,4-thiadiazol, ein Salz von 2,5-Dimercapto-1,3,4-thiadiazol, 5-(Methylthio)-1,3,4-thiadiazol-2-thiol, ein Salz von 5-(Methylthio)-1,3,4-thiadiazol-2-thiol, 5-(Ethylthio)-1,3,4-thiadiazol-2-thiol und ein Salz von 5-(Ethylthio)-1,3,4-thiadiazol-2-thiol.

4. Verfahren nach Anspruch 3, wobei der wässrigen Lösung, die dazu eingesetzt wird, das CO₂ aus den Verbrennungsgasen abzufangen, mindestens eine abbauhemmende Verbindung zugesetzt wird, welche aus 5,5'-Dithiobis(1,3,4-thiadiazol-2(3H)-thion), dem Natriumsalz von 5,5'-Dithiobis(1,3,4-thiadiazol-2(3H)-thion), 2,5-Dimercapto-1,3,4-thiadiazol und dem Natriumsalz von 2,5-Dimercapto-1,3,4-thiadiazol ausgewählt ist, um den Abbau des Monoethanolamins in dieser wässrigen Lösung zu beschränken.

5. Verfahren nach Anspruch 1, wobei die wässrige Lösung dazu eingesetzt wird, die sauren Verbindungen zu absorbieren, wie sie in einem der Stoffströme aus der Gruppe vorliegen, welche Erdgas, Verbrennungsrauchgase, Synthesegase, Raffineriegase, Gase, die ausgangsseitig des Claus-Verfahrens erhalten werden, Gase, die bei der Vergärung von Biomasse anfallen, Gase aus Zementwerken und Rauchgase aus Verbrennungsanlagen enthält.

6. Absorbierende Lösung zur Absorption der sauren Verbindungen eines Abgasstroms, wobei die Lösung Folgendes aufweist:
a) zwischen 10 Gewichts-% und 80 Gewichts-% mindestens eines Amins, wobei das Amin aus der Gruppe ausgewählt ist, die Folgendes enthält: N,N,N',N',N"-Pentamethylethylentriamin, Piperazin, Monoethanolamin, Diethanolamin, Methyldiethanolamin, Diisopropanolamin, Diglycolamin, ein Glycinsalz und ein Taurinsalz,
b) zwischen 10 Gewichts-% und 90 Gewichts-% an Wasser,
c) zwischen 5 ppm und 5 Gewichts-% mindestens einer abbauhemmenden Verbindung, um den Abbau des Amins zu beschränken, wobei die abbauhemmende Verbindung die folgende allgemeine Formel aufweist: 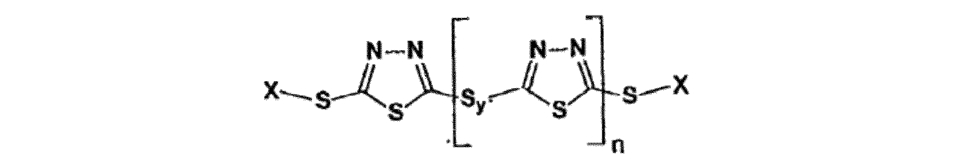 in welcher X aus der Gruppe ausgewählt ist, die Folgendes enthält
• ein Wasserstoffatom,
• eine Kohlenwasserstoffgruppe mit 1 bis 20 Kohlenstoffatomen,
• ein Alkalielement,
• ein Erdalkalielement,
• ein einwertiges Metall,
• ein mehrwertiges Metall,
• ein Ammonium,
und in welcher
y im Bereich von 1 bis 4 liegt,
n im Bereich von 0 bis 4 liegt.

7. Absorbierende Lösung nach Anspruch 6, wobei X eine Kohlenwasserstoffgruppe ist, die zwischen 1 und 20 Kohlenstoffatome enthält und mindestens ein Heteroatom umfasst.

8. Absorbierende Lösung nach einem der Ansprüche 6 und 7, wobei die abbauhemmende Verbindung aus der Gruppe ausgewählt ist, die Folgendes enthält: 5,5'-Dithiobis(1,3,4-thiadiazol-2(3H)-thion), ein Salz von 5,5'-Dithiobis(1,3,4-thiadiazol-2(3H)-thion), 2,5-Dimercapto-1,3,4-thiadiazol, ein Salz von 2,5-Dimercapto-1,3,4-thiadiazol, 5-(Methylthio)-1,3,4-thiadiazol-2-thiol, ein Salz von 5-(Methylthio)-1,3,4-thiadiazol-2-thiol, 5-(Ethylthio)-1,3,4-thiadiazol-2-thiol und ein Salz von 5-(Ethylthio)-1,3,4-thiadiazol-2-thiol.

9. Absorbierende Lösung nach einem der Ansprüche 6 bis 8, in welcher es sich bei dem Amin um Monoethanolamin handelt und in welcher die abbauhemmende Verbindung aus 5,5'-Dithiobis(1,3,4-thiadiazol-2(3H)-thion), dem Natriumsalz von 5,5'-Dithiobis(1,3,4-thiadiazol-2(3H)-thion), 2,5-Dimercapto-1,3,4-thiadiazol und dem Natriumsalz von 2,5-Dimercapto-1,3,4-thiadiazol ausgewählt ist.

## Claims

1. A method for absorbing acid compounds contained in a gaseous effluent, wherein the gaseous effluent is contacted with an aqueous solution comprising at least one amine, said amine being selected from the group containing N,N,N',N',N"-pentamethylethylenetriamine, piperazine, monoethanolamine, diethanolamine, methyldiethanolamine, diisopropanolamine, diglycolamine, a glycine salt and a taurine salt, and wherein the degradation of said amine is controlled by introducing at least one degradation inhibiting compound for limiting the degradation of said amine, the degradation inhibiting compound having the general formula as follows: 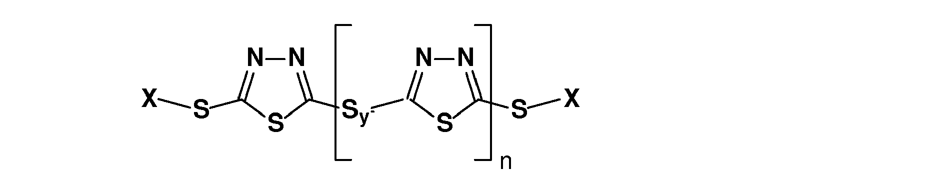 where X is selected from the group containing:
• a hydrogen atom,
• a hydrocarbon group containing 1 to 20 carbon atoms,
• an alkaline element,
• an alkaline-earth element,
• a monovalent metal,
• a multivalent metal,
• an ammonium,
and where:
y ranges between 1 and 4,
n ranges between 0 and 4,
said solution comprising between 10 wt.% and 80 wt.% of said amine, between 10 wt.% and 90 wt.% water, and between 5 ppm and 5 wt.% of said degradation inhibiting compound.

2. A method as claimed in claim 1, wherein X is a hydrocarbon group containing between 1 and 20 carbon atoms, and including at least one heteroatom.

3. A method as claimed in any one of the previous claims, wherein at least one degradation inhibiting compound selected from the following group is added to the aqueous solution: 5,5'-dithiobis(1,3,4-thiadiazole-2(3H)-thione), a 5,5'-dithiobis(1,3,4-thiadiazole-2(3H)-thione) salt, 2,5-dimercapto-1,3,4-thiadiazole, a 2,5-dimercapto-1,3,4-thiadiazole salt, 5-(methylthio)-1,3,4-thiadiazole-2-thiol, a 5-(methylthio)-1,3,4-thiadiazole-2-thiol salt, 5-(ethylthio)-1,3,4-thiadiazole-2-thiol and a 5-(éthylthio)-1,3,4-thiadiazole-2-thiol salt.

4. A method as claimed in claim 3 wherein, in order to limit the degradation of the monoethanolamine in aqueous solution used to capture the CO₂ in combustion fumes, at least one degradation inhibiting compound from the following group is added to the aqueous solution: 5,5'-dithiobis(1,3,4-thiadiazole-2(3H)-thione), 5,5'-dithiobis(1,3,4-thiadiazole-2(3H)-thione) sodium salt, 2,5-dimercapto-1,3,4-thiadiazole, 2,5-dimercapto-1,3,4-thiadiazole sodium salt.

5. A method as claimed in claim 1, wherein the aqueous solution is used to absorb acid compounds contained in one of the effluents of the group containing natural gas, combustion fumes, syngas, refinery gases, Claus tail gases, biomass fermentation gases, cement plant gases and incinerator fumes.

6. An absorbent solution for absorbing acid compounds of a gaseous effluent, said solution comprising:
a) between 10 wt.% and 80 wt.% of at least one amine, said amine being selected from the group containing N,N,N',N',N"-pentamethylethylenetriamine, piperazine, monoethanolamine, diethanolamine, methyldiethanolamine, diisopropanolamine, diglycolamine, a glycine salt and a taurine salt,
b) between 10 wt.% and 90 wt.% water,
c) between 5 ppm and 5 wt.% of at least one degradation inhibiting compound for limiting the degradation of said amine, the degradation inhibiting compound having the general formula as follows: 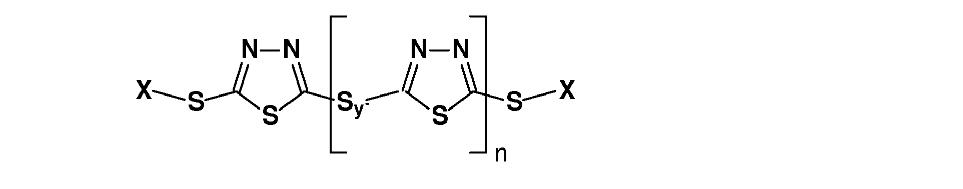 where X is selected from the group containing:
• a hydrogen atom,
• a hydrocarbon group containing 1 to 20 carbon atoms,
• an alkaline element,
• an alkaline-earth element,
• a monovalent metal,
• a multivalent metal,
• an ammonium,
and where:
y ranges between 1 and 4,
n ranges between 0 and 4.

7. An absorbent solution as claimed in claim 6, wherein X is a hydrocarbon group containing between 1 and 20 carbon atoms, and including at least one heteroatom.

8. An absorbent solution as claimed in any one of claims 6 and 7, wherein the degradation inhibiting compound is selected from the group containing: 5,5'-dithiobis(1,3,4-thiadiazole-2(3H)-thione), a 5,5'-dithiobis(1,3,4-thiadiazole-2(3H)-thione) salt, 2,5-dimercapto-1,3,4-thiadiazole, a 2,5-dimercapto-1,3,4-thiadiazole salt, 5-(methylthio)-1,3,4-thiadiazole-2-thiol, a 5-(methylthio)-1,3,4-thiadiazole-2-thiol salt, 5-(thylthio)-1,3,4-thiadiazole-2-thiol and a 5-(ethylthio)-1,3,4-thiadiazole-2-thiol salt.

9. An absorbent solution as claimed in any one of claims 6 to 8, wherein the amine is monoethanolamine and wherein the degradation inhibiting compound is selected from among 5,5'-dithiobis(1,3,4-thiadiazole-2(3H)-thione), 5,5'-dithiobis(1,3,4-thiadiazole-2(3H)-thione) sodium salt, 2,5-dimercapto-1,3,4-thiadiazole and 2,5-dimercapto-1,3,4-thiadiazole sodium salt.
